Europäisches Patentamt

European Patent Office

Office européen des brevets

(19)

(11) Veröffentlichungsnummer: **0 049 328**
B1

(12) **EUROPÄISCHE PATENTSCHRIFT**

(45) Veröffentlichungstag der Patentschrift:
27.12.84

(51) Int. Cl.³: **F 27 D 17/00, F 24 D 11/00**

(21) Anmeldenummer: 81105142.4

(22) Anmeldetag: 02.07.81

(54) Vorrichtung zur Ausnutzung der Wärme im Abgas von mehreren Prozessbereichen.

(30) Priorität: 24.09.80 DE 3035937

(43) Veröffentlichungstag der Anmeldung:
14.04.82 Patentblatt 82/15

(45) Bekanntmachung des Hinweises auf die Patenterteilung:
27.12.84 Patentblatt 84/52

(84) Benannte Vertragsstaaten:
AT BE CH DE FR GB IT LI LU NL SE

(56) Entgegenhaltungen:
DE - A - 2 912 553
DE - B - 1 041 651
DE - B - 1 200 333
FR - A - 1 354 149
US - A - 2 438 719
US - A - 4 163 469

(73) Patentinhaber: Klöckner GEFI KG Industrielle
Wärmetechnik, Blumentalstrasse 164/166,
D-4150 Krefeld (DE)

(72) Erfinder: Ritz, Willi, Kölner Strasse 670, D-4150 Krefeld
(DE)

(74) Vertreter: Stark, Walter, Dr.-Ing., Moerser Strasse 140,
D-4150 Krefeld (DE)

## Beschreibung

Die Erfindung betrifft eine Vorrichtung zur Ausnutzung der Wärme im Abgas von mehreren, diskontinuierlich arbeitenden Prozessbereichen, mit einem im Abgasweg liegenden Wärmetauscher und einer Regelung für die Endtemperatur des Wärmetauschermediums.

Aus der US-A-41 63 469 ist eine Vorrichtung bekannt, bei der jeder der kontinuierlich arbeitenden Prozessbereiche einen eigenen zugeordneten Wärmetauscher mit Überhitzungsregelung aufweist. Da alle Prozessbereiche kontinuierlich arbeiten, arbeitet auch die Regelung kontinuierlich.

In verschiedenen Bereichen der industriellen Technik fallen intermittierend oder diskontinuierlich Prozess-, Rest- oder Abgase an, deren Temperatur während der Durchführung des Prozesses nicht konstant zu sein braucht, sondern in regelmässigen oder unregelmässigen zeitlichen Abständen schwanken kann. In solchen Fällen ist die Ausnutzung oder Gewinnung der in den heissen Gasen enthaltenen Wärmeenergie problematisch, weil die Zeiten, in denen die Wärmeenergie anfällt, in der Regel nicht bekannt und auch nicht vorherbestimmbar sind. Das gilt auch dann, wenn in mehreren, unabhängig voneinander arbeitenden Prozessbereichen diskontinuierlich Abgaswärme anfällt. Soll die Abgaswärme von mehreren derartigen Prozessbereichen ausgenutzt werden, dann kommt hinzu, dass die Qualität dieser Abgaswärme, d.h. die Temperatur der Abgase der einzelnen Prozessbereiche, unterschiedlich ist, wobei im Einzelfall die Ausnutzung vorhandener Wärmeenergie z.B. wegen zu niedriger oder zu hoher Temperatur insbesondere für Prozesszwecke nicht möglich ist.

Der Erfindung liegt die Aufgabe zugrunde, eine Vorrichtung der eingangs beschriebenen Gattung anzugeben, mit dem die diskontinuierlich anfallende Wärmeenergie auch unterschiedlicher Qualität zur Aufheizung eines Wärmetauschermediums auf gleichbleibende Temperatur, insbesondere zur Warmwasserbereitung, verwendet werden kann.

Diese Aufgabe wird dadurch gelöst, dass alle Prozessbereiche an eine gemeinsame Abgaszweigleitung angeschlossen sind und dass der Abgaszweigleitung ein Abgasmengenregelkreis zugeordnet ist, der mit einer Sollwerteingabe für die gewünschte Endtemperatur des Wärmetauschermediums und einem Temperaturmessfühler am Ausgang des Sekundärkreislaufs des Wärmetauschers sowie einem regelbaren Absperrorgan in der Abgaszweigleitung versehen ist.

Überraschenderweise hat sich gezeigt, dass auch bei diskontinuierlichem Anfall von Abgasen und bei Überführung der jeweils anfallenden Abgasmengen in eine gemeinsame Abgaszweigleitung die in den Abgasen enthaltene Wärmeenergie zur Aufheizung des Wärmetauschermediums auf gleichbleibende Temperatur genutzt werden kann und dass die regeltechnischen Massnahmen auch dann funktionieren, wenn mehrere Prozessbereiche nacheinander und/oder gleichzeitig Abwärme liefern.

Um eine Überhitzung des Wärmetauschers durch zu heisses Abgas zu vermeiden, kann zusätzlich ein Abgastemperatur-Regelkreis mit einer Sollwerteingabe und einem Temperaturmessfühler in der Abgaszweigleitung sowie einem regelbaren Absperrorgan in einer an die Abgaszweigleitung angeschlossenen Frischluftleitung vorgesehen sein. Damit können Menge und/oder Temperatur der aus den verschiedenen Prozessbereichen kommenden Abgase stets so geregelt werden, dass das Wärmetauschermedium, insbesondere Wasser, den Wärmetauscher mit gleichbleibender Temperatur verlässt.

Zweckmässig wird an die Abgaszweigleitung ein Sauggebläse angeschlossen, welches dafür sorgt, dass auch bei längeren Abgaszweigleitungen stets Abgas in genügender Menge von den verschiedenen Prozessbereichen zum Wärmeaustauscher geführt wird. Wenn die Abgaszweigleitung hinter dem Wärmetauscher in den oder die Abgaskamine der Prozessbereiche zurückgeführt wird, kann auf einfache Weise verhindert werden, dass durch das offene Ende eines nicht in Betrieb befindlichen Prozessbereiches Frischluft in die zugeordnete Abgaszweigleitung eingesaugt wird, denn das auf diese Weise in den betreffenden Abgaskamin eingeblasene abgekühlte Abgas entfaltet dort eine Injektorwirkung, die das Ansaugen von Frischluft verhindert.

Zusätzlich kann es vorteilhaft sein, wenn jeder Abgaskamin ein einstellbares Absperrorgan aufweist, das in Strömungsrichtung hinter dem Anschluss der Rückführung angeordnet ist. Dieses Absperrorgan soll den betreffenden Prozessbereich von seinem Abgaskamin trennen, wenn der Prozessbereich ausser Betrieb ist. Zur Unterstützung des Sauggebläses kann es zweckmässig sein, wenn jeder Abgaskamin in Strömungsrichtung hinter dem Anschluss der Abgaszweigleitung eines Drossel oder ein einstellbares Absperrorgan aufweist, das eine Druckerhöhung im Bereich des Anschlusses der Abgaszweigleitung bewirkt und/oder ggf. auch den gesamten Abgasstrom in die Abgaszweigleitung leitet.

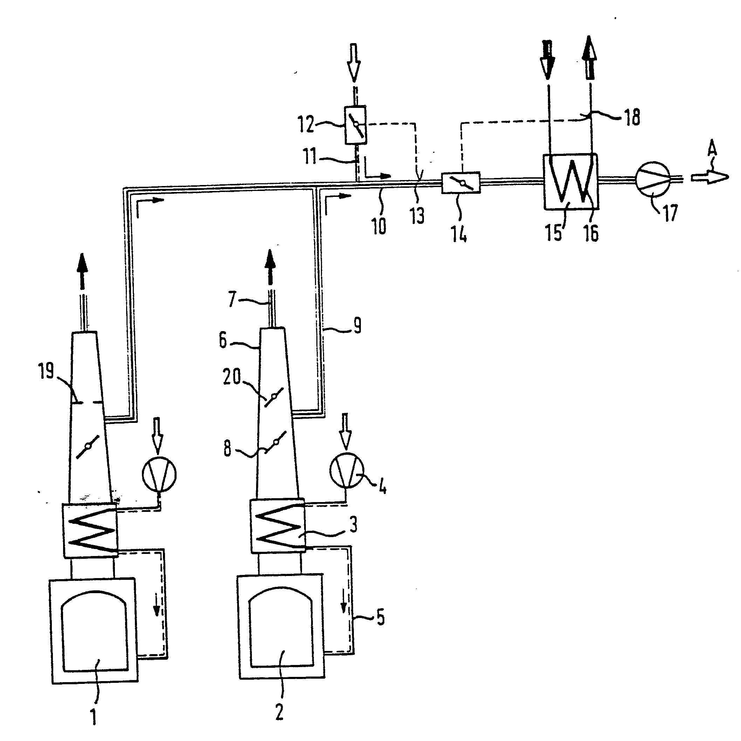

Im folgenden wird ein in der Zeichnung dargestelltes Ausführungsbeispiel erläutert; es zeigt die einzige Figur in schematischer Darstellung und nach Art eines Blockschaltbildes die Ausnutzung der Abgaswärme von zwei Öfen zur Warmwasserbereitung.

Beim dargestellten Ausführungsbeispiel sind zwei Öfen 1, 2 vorhanden. Es können aber auch nur ein Ofen oder es können mehrere Öfen vorhanden sein. Die beiden Öfen 1, 2 sind identisch aufgebaut, so dass es genügt, nur einen Ofen zu beschreiben. Die beiden Öfen 1, 2 werden jedoch diskontinuierlich betrieben, sie können zu verschiedenen Zeiten arbeiten und liefern Abgase mit unterschiedlichen Temperaturen.

In den Abgasweg jedes Ofens 1 bzw. 2 ist ein Wärmetauscher 3 geschaltet, der als Luftvorwärmer arbeitet und dessen Sekundärseite von einem Gebläse 4 mit Kaltluft versorgt wird, die nach Aufheizung im Wärmetauscher 3 über eine Leitung 5 in den Verbrennungsraum des betreffenden Ofens geführt wird. An den Wärmetauscher 3 schliesst sich ein Abgaskamin 6 an, durch den das erzeugte Abgas bei 7 ins Freie geleitet wird. Der Kamin 6 ist mit einem einstellbaren Absperrorgan 8, hier eine Absperrklappe, verschliessbar.

In Strömungsrichtung hinter dem Absperrorgan 8 ist an jeden Abgaskamin 6 eine Abgaszweigleitung 9 angeschlossen. Die Abgasleitungen 9 der Öfen 1 bzw. 2 vereinigen sich zu einer gemeinsamen Leitung 10.

Hinter der Vereinigungsstelle der verschiedenen Abgaszweigleitungen 9 mündet in die Leitung 10 eine Frischluftleitung 11 mit einem regelbaren Absperrorgan 12, das beim Ausführungsbeispiel als Regelklappe ausgeführt ist. Dieses regelbare Absperrorgan 12 bildet zusammen mit einem Temperaturfühler 13, der in Strömungsrichtung hinter der Einmündung der Frischluftleitung 13 in der Leitung 10 angeordnet ist, einen Regelkreis zur Einstellung der Abgastemperatur. Die Funktion dieses Regelkreises wird später erläutert.

Weiter in Strömungsrichtung der Leitung 10 befindet sich ein regelbares Absperrorgan 14, das beim Ausführungsbeispiel wiederum als Regelklappe ausgebildet ist. Hinter diesem Absperrorgan 14 mündet die Leitung 10 in einen Wärmetauscher 15, dessen Sekundärkreislauf 16 mit Wasser gespeisst wird, das auf eine gleichmässige Temperatur aufgeheizt werden soll.

Am Ausgang des Wärmetauschers 15 setzt sich die Leitung 10 bis zu einem Sauggebläse 17 fort, dessen Ausgang A zu den Abgaskaminen 6 zurückgeführt ist und dort oberhalb der Absperrorgane 8 in diese Abgaskamine 6 mündet.

Am Ausgang des Sekundärkreislaufs 16 befindet sich ein Temperaturfühler 18, der die Temperatur des erwärmten Wassers erfasst und zusammen mit dem Absperrorgan 14 einen Regelkreis zum Konstanthalten der Wassertemperatur bildet.

Die dargestellte Anlage arbeitet wie folgt: solange einer oder beide Öfen 1 bzw. 2 arbeiten, liefern sie auch Abgas in die zugeordneten Abgaszweigleitungen 9 und damit in die Abgasleitung 10. Damit am Anschluss der Abgasleitung 9 an den zugeordneten Kamin ein hinreichender Druck zur Unterstützung der Saugwirkung des Sauggebläses 17 zur Verfügung steht, ist in Strömungsrichtung der Abgase hinter dem Anschluss der jeweiligen Abgaszweigleitung 9 ein Drosselorgan 19 (beim Ofen 1) oder eine einstellbare Absperrklappe 20 (beim Ofen 2) angeordnet. Die Drossel 19 und/oder die Absperrklappe 20 verhindern auch das Ansaugen von Frischluft durch den betreffenden Abgaskamin 6, wenn der zugeordnete Ofen 1 bzw. 2 ausser Betrieb ist.

Das durch die Leitungen 9 und 10 gesaugte Abgas erwärmt das durch den Sekundärkreislauf 16 des Wärmetauschers 15 fliessende Wasser. Das in den Sekundärkreislauf 16 eintretende Wasser hat z.B. eine Temperatur von 70 °C und soll auf eine Temperatur von 90 °C aufgeheizt werden. Damit die Endtemperatur des austretenden Wassers stets eingehalten wird, wird die Menge des durch den Wärmetauscher 15 strömenden Abgases vom Absperrorgan 14 geregelt, wobei die Einstellung dieses Absperrorganes 14 nach Massgabe der Temperaturdifferenz zwischen der Temperaturanzeige des Temperaturmessfühlers 18 am Ausgang des Sekundärkreislaufs 16 und einer nicht dargestellten Sollwerteingabe bewirkt wird.

Der Temperaturfühler 13 in der Leitung 10 kontrolliert ständig die tatsächliche Temperatur des Abgases. Wenn die Abgastemperatur einen vorbestimmten Wert, z.B. 450 °C, überschreitet, wird der vom Temperaturfühler 13 und dem regelbaren Absperrorgan 12 in der Frischluftleitung 11 gebildete Regelkreis aktiviert, d.h. das Absperrorgan 12 öffnet mehr oder weniger, so dass Frischluft mit Raumtemperatur in die Leitung 10 eingesaugt wird. Dadurch kann eine Überhitzung des Wärmetauschers 15 vermieden werden. Das mit einer Temperatur von z.B. maximal 450 °C in den Wärmetauscher 15 eintretende Abgas verlässt diesen mit einer Temperatur von ca. 150 °C, während das mit einer Temperatur von ca. 70 °C in den Sekundärkreislauf 16 eintretende Wasser den Sekundärkreislauf mit einer Temperatur von ca. 90 °C verlässt. Die Wassertemperatur am Ausgang des Sekundärkreislaufs 16 bleibt konstant und unabhängig davon, welche der Öfen 1 bzw. 2 oder weitere Öfen arbeiten, vorausgesetzt, dass überhaupt ein Ofen arbeitet.

**Patentansprüche**

1. Vorrichtung zur Ausnutzung der Wärme im Abgas von mehreren, diskontinuierlich arbeitenden Prozessbereichen (1, 2), mit einem im Abgasweg liegenden Wärmetauscher (15) und einer Regelung für die Endtemperatur des Wärmetauschermediums, dadurch gekennzeichnet, dass alle Prozessbereiche (1, 2) an eine gemeinsame Abgaszweigleitung (9, 10) angeschlossen sind und dass der Abgaszweigleitung (9, 10) ein Abgasmengenregelkreis zugeordnet ist, der mit einer Sollwerteingabe für die gewünschte Endtemperatur des Wärmetauschermediums und einem Temperaturmessfühler (18) am Ausgang des Sekundärkreislaufs (16) des Wärmetauschers (15) sowie einem regelbaren Absperrorgan (14) in der Abgaszweigleitung (9, 10) versehen ist.

2. Vorrichtung nach Anspruch 1, gekennzeichnet durch einen Abgastemperatur-Regelkreis mit einer Sollwerteingabe und einem Temperaturmessfühler (13) in der Abgaszweigleitung (9, 10) sowie einem regelbaren Absperrorgan (12) in einer an die Abgaszweigleitung (9, 10) angeschlossenen Frischluftleitung (11).

3. Vorrichtung nach Anspruch 1 oder 2, dadurch gekennzeichnet, dass an die Abgaszweigleitung (10) ein Sauggebläse (17) angeschlossen ist.

4. Vorrichtung nach einem der Ansprüche 1–3, dadurch gekennzeichnet, dass die Abgaszweigleitung (10) hinter dem Wärmetauscher (15) in den oder die Abgaskamine (6) der Prozessbereiche (1, 2) zurückgeführt ist.

5. Vorrichtung nach einem der Ansprüche 1–4, dadurch gekennzeichnet, dass jeder Abgaskamin (6) ein einstellbares Absperrorgan (19 bzw. 20) aufweist, das in Strömungsrichtung vor dem Anschluss der Rückführung (A) angeordnet ist.

6. Vorrichtung nach einem der Ansprüche 1–5, dadurch gekennzeichnet, dass jeder Abgaskamin (6) in Strömungsrichtung hinter dem Anschluss der Abgaszweigleitung (9) eine Drossel (19) oder ein einstellbares Absperrorgan (20) aufweist.

**Revendications**

1. Dispositif de récupération de la chaleur des gaz d'échappement de plusieurs installations (1, 2) à fonctionnement discontinu, comportant un échangeur de chaleur (15) situé dans le parcours des gaz d'échappement et une régulation de la température finale du milieu d'échange de chaleur, caractérisé en ce que toutes les installations (1, 2) sont raccordées à une conduite commune de branchement de gaz d'échappement (9, 10), et en ce qu'à la conduite de branchement de gaz d'échappement (9, 10) est adjointe une boucle de régulation de quantité de gaz d'échappement qui est munie d'une introduction de valeur de consigne pour la température finale désirée du milieu d'échange de chaleur et d'un capteur de température (18) à la sortie du circuit secondaire (16) de l'échangeur de chaleur (15), ainsi que d'un organe d'isolement réglable (14) dans la conduite de branchement de gaz d'échappement (9, 10).

2. Dispositif selon la revendication 1, caractérisé par une boucle de régulation de température des gaz d'échappement munie d'une introduction de valeur de consigne et d'un capteur de température (13) dans la conduite de branchement de gaz d'échappement (9, 10), ainsi que par un organe d'isolement réglable (12) dans une conduite à air frais (11) raccordée à la conduite de branchement de gaz d'échappement (9, 10).

3. Dispositif selon l'une des revendications 1 ou 2, caractérisé en ce qu'à la conduite de branchement de gaz d'échappement (10) est raccordé un ventilateur aspirant (17).

4. Dispositif selon l'une des revendications 1 à 3, caractérisé en ce que la conduite de branchement de gaz d'échappement (10) est ramenée, derrière l'échangeur de chaleur (15) à la ou aux cheminées à gaz d'échappement (6) des installations (1, 2).

5. Dispositif selon l'une des revendications 1 à 4, caractérisé en ce que chaque cheminée à gaz d'échappement (6) présente un organe d'isolement réglable (19, 20) qui est disposé, dans le sens d'écoulement, avant le raccordement du retour (A).

6. Dispositif selon l'une des revendications 1 à 5, caractérisé en ce que chaque cheminée à gaz d'échappement (6) présente, à la suite du raccordement de la conduite de branchement de gaz d'échappement (9), dans le sens d'écoulement, un étrangleur (19) ou un organe d'isolement réglable (20).

**Claims**

1. A device for utilizing the heat in the waste gas of a plurality of discontinuously operating processing areas (1, 2), having a heat exchanger (15) disposed in the path of the waste gas and a control means for the final temperature of the heat exchanger medium, characterized in that all processing areas (1, 2) are connected to a common waste gas branch line (9, 10), and there is associated with the waste gas branch line (9, 10) a waste gas volume control circuit which is provided with a nominal value input for the desired final temperature of the heat exchanger medium and a temperature-measuring sensor (18) at the output of the secondary circuit (16) of the heat exchanger (15) and a controllable blocking means (14) in the waste gas branch line (9, 10).

2. A device according to Claim 1, characterized by a waste gas temperature control circuit with a nominal value input and a temperature-measuring sensor (13) in the waste gas branch line (9, 10) and a controllable blocking means (12) in a fresh air line (11) connected to the waste gas branch line (9, 10).

3. A device according to Claim 1 or 2, characterized in that a suction fan (17) is connected to the waste gas branch line (10).

4. A device according to any one of Claims 1 to 3, characterized in that waste gas branch line (10) is led back behind the heat exchanger (15) into the waste gas flue or flues (6) of the processing areas (1, 2).

5. A device according to any one of Claims 1 to 4, characterized in that each waste gas flue (6) comprises an adjustable blockung means (19 and 20 respectively) which is disposed upstream of the junction of the return path (A) in the direction of flow.

6. A device according to any one of Claims 1 to 5, characterized in that each waste gas flue (6) comprises a throttle (19) or an adjustable blocking means (20) downstream of the junction of the waste gas branch line (9) in the direction of flow.